# EUROPEAN PATENT APPLICATION

(11) **EP 3 322 169 A1**
(43) Date of publication of application: **16.05.2018**
(21) Application number: 16821305.6
(22) Date of filing: 30.06.2016
(51) Int. Cl.: H04M 11/00, G06F 1/28, G08B 23/00

(54) **INFORMATION PROCESSOR, DEVICE, INFORMATION PROCESSING SYSTEM, INFORMATION PROCESSING METHOD, AND INFORMATION PROCESSING PROGRAM**

(30) Priority: 08.07.2015 JP 2015137349
(71) Applicant: NEC Corporation, Tokyo 108-8001 (JP)
(72) Inventor: UCHIDA Norio, Tokyo 108-8001 (JP); YAMADA Toru, Tokyo 108-8001 (JP)
(74) Representative: MacDougall, Alan John Shaw
(86) International application number: PCT/JP2016/069481
(87) International publication number: WO 2017/006836

(57) **Abstract**

To prolong the life of the battery of a device and reduce the labor of replacing the battery of the device, as compared with a conventional technique, an information processing apparatus includes a receiver that receives, from the device, device information including information acquired by the device and remaining capacity information indicating a battery remaining capacity of the device, and a period setting unit that sets, if the receiver receives the device information, a temporary storage period of the acquired information in a temporary storage unit based on the remaining capacity information included in the device information. Alternatively, an information processing apparatus includes a receiver that receives, from a device for converting acquired information into a transmission signal and transmitting the transmission signal, the transmission signal, a battery remaining capacity calculator that calculates, based on the transmission signal, a remaining capacity of a battery for driving the device, and a period setting unit that sets a temporary storage period of the acquired information in a temporary storage unit based on remaining capacity information indicating the remaining capacity of the battery.

## Description

### CROSS REFERENCE TO RELATED APPLICATIONS

This application claims the benefit of Japanese Patent Application No. 2015-137349, filed on July 8, 2015, which is hereby incorporated by reference in its entirety.

### TECHNICAL FIELD

The present invention relates to an information processing apparatus, a device, an information processing system, an information processing method, and an information processing program.

### BACKGROUND ART

In the above technical field, patent literature 1 discloses a technique of acquiring, using a device, sensor data requested by an application. Patent literature 1 also discloses a technique of temporarily collecting sensor data acquired by a plurality of devices to a plurality of M2M gateways, and finally collecting all the sensor data from the respective M2M gateways to an M2M server.

### CITATION LIST

### PATENT LITERATURE

Patent literature 1: Japanese Patent Laid-Open No. 2014-068285

### SUMMARY OF THE INVENTION

### TECHNICAL PROBLEM

In the technique described in the above patent literature, however, a device transmits only sensor data to an M2M gateway. Therefore, if the battery of the device is exhausted, the M2M gateway cannot acquire sensor data. In addition, since the device transmits sensor data to the M2M gateway for every predetermined period, the battery is always consumed at a predetermined rate, and thus it is impossible to prolong the life of the battery of the device. The labor of replacing the battery of the device is also required.

The present invention enables to provide a technique of solving the above-described problem.

### SOLUTION TO PROBLEM

One example aspect of the present invention provides an information processing apparatus comprising:
a receiver that receives, from a device, device information including information acquired by the device and remaining capacity information indicating a battery remaining capacity of the device; and
a period setting unit that sets, if the receiver receives the device information, a temporary storage period of the acquired information in a temporary storage unit based on the remaining capacity information included in the device information.

Another example aspect of the present invention provides an information processing apparatus comprising:
a receiver that receives, from a device for converting acquired information into a transmission signal and transmitting the transmission signal, the transmission signal;
a battery remaining capacity calculator that calculates, based on the transmission signal received by the receiver, a remaining capacity of a battery for driving the device; and
a period setting unit that sets a temporary storage period of the acquired information in a temporary storage unit based on remaining capacity information indicating the remaining capacity of the battery.

Still other example aspect of the present invention provides a device for transmitting a transmission signal to an information processing apparatus, comprising:
an information acquirer that acquires predetermined information as acquired information;
a transmitter that converts transmission information including the acquired information into a transmission signal and transmits the transmission signal; and
a detector that detects a remaining capacity of a battery for driving the information acquirer and the transmitter,
the transmitter including
a receiver that receives, as the transmission signal, the transmission information including the acquired information from the device,
a temporary storage unit that temporarily stores the acquired information,
a battery remaining capacity recognizer that recognizes the remaining capacity of the battery based on at least one of the transmission signal and the transmission information received by the receiver, and
a period setting unit that sets a temporary storage period of the acquired information in the temporary storage unit based on the remaining capacity of the battery.

Still other example aspect of the present invention provides an information processing method comprising:
receiving, from a device, transmission information including information acquired by the device;
temporarily storing the acquired information in a temporary storage device;
recognizing a remaining capacity of a battery for driving the device; and
setting a temporary storage period of the acquired information in the temporary storage device based on the remaining capacity of the battery.

Still other example aspect of the present invention provides an information processing method comprising:
receiving, from a device for converting acquired information into a transmission signal and transmitting the transmission signal, the transmission signal;
calculating, based on the transmission signal, a remaining capacity of a battery for driving the device; and
setting a temporary storage period of the acquired information in a temporary storage unit based on remaining capacity information indicating the remaining capacity of the battery.

Still other example aspect of the present invention provides an information processing program for causing a computer to execute a method, comprising:
receiving, from a device, transmission information including information acquired by the device;
temporarily storing the acquired information in a temporary storage device;
recognizing a remaining capacity of a battery for driving the device; and
setting a temporary storage period of the acquired information in the temporary storage device based on the remaining capacity of the battery.

Still other example aspect of the present invention provides an information processing program for causing a computer to execute a method, comprising:
receiving, from a device for converting acquired information into a transmission signal and transmitting the transmission signal, the transmission signal;
calculating, based on the transmission signal, a remaining capacity of a battery for driving the device; and
setting a temporary storage period of the acquired information in a temporary storage unit based on remaining capacity information indicating the remaining capacity of the battery.

### ADVANTAGEOUS EFFECTS OF INVENTION

According to the present invention, it is possible to prolong the life of the battery of a device, thereby reducing the labor of replacing the battery of the device, as compared with the conventional technique.

### BRIEF DESCRIPTION OF DRAWINGS

Fig. 1A is a block diagram showing the arrangement of an information processing apparatus according to the first example embodiment of the present invention;
Fig. 1B is a block diagram showing the arrangement of another information processing apparatus according to the first example embodiment of the present invention;
Fig. 2 is a block diagram for explaining the functional arrangement of an information processing system according to the second example embodiment of the present invention;
Fig. 3 is a block diagram for explaining the hardware arrangement of an information processing apparatus according to the second example embodiment of the present invention;
Fig. 4 is a view for explaining the structure of cache data according to the second example embodiment of the present invention;
Fig. 5 is a table showing the relationship between a battery remaining capacity and the temporary storage period of acquired information according to the second example embodiment of the present invention;
Fig. 6 is a graph showing the relationship between the battery remaining capacity and the temporary storage period of the acquired information according to the second example embodiment of the present invention;
Fig. 7 is a block diagram for explaining the functional arrangement of a device according to the second example embodiment of the present invention;
Fig. 8 is a block diagram for explaining the hardware arrangement of the device according to the second example embodiment of the present invention;
Fig. 9 is a flowchart for explaining the processing procedure of the information processing apparatus according to the second example embodiment of the present invention;
Fig. 10 is a view for explaining the relationship among an information acquisition request by an application server, information acquisition by the device, and the temporary storage period of the acquired information according to the second example embodiment of the present invention;
Fig. 11 is a block diagram for explaining the functional arrangement of an information processing system according to the third example embodiment of the present invention;
Fig. 12 is a graph for explaining information representing the correspondence between a reception signal strength and a battery remaining capacity according to the third example embodiment of the present invention;
Fig. 13A is a block diagram for explaining the functional arrangement of a device according to the third example embodiment of the present invention;
Fig. 13B is a block diagram for explaining the another system arrangement according to the third example embodiment of the present invention;
Fig. 14 is a block diagram for explaining the functional arrangement of an information processing system according to the fourth example embodiment of the present invention;
Fig. 15 is a view for explaining information held in a storage unit according to the fourth example embodiment of the present invention;
Fig. 16 is a block diagram for explaining the functional arrangement of an information processing system according to the fifth example embodiment of the present invention;
Fig. 17 is a block diagram for explaining the functional arrangement of a device according to the fifth example embodiment of the present invention;
Fig. 18 is a block diagram for explaining the functional arrangement of an information processing system according to the sixth example embodiment of the present invention;
Fig. 19 is a view showing tables each representing the relationship between the remaining discharge capacity and the temporary storage period of acquired information according to the seventh example embodiment of the present invention;
Fig. 20 is a view showing tables each representing the relationship between the voltage value and the temporary storage period of the acquired information according to the seventh example embodiment of the present invention;
Fig. 21 is a view showing tables each representing the relationship between the remaining driving time and the temporary storage period of the acquired information according to the seventh example embodiment of the present invention; and
Fig. 22 is a view showing tables each representing the relationship between the transmittable count and the temporary storage period of the acquired information according to the seventh example embodiment of the present invention.

### DESCRIPTION OF EXAMPLE EMBODIMENTS

Example embodiments of the present invention will now be described in detail with reference to the drawings. It should be noted that the relative arrangement of the components, the numerical expressions and numerical values set forth in these example embodiments do not limit the scope of the present invention unless it is specifically stated otherwise.

### [First Example Embodiment]

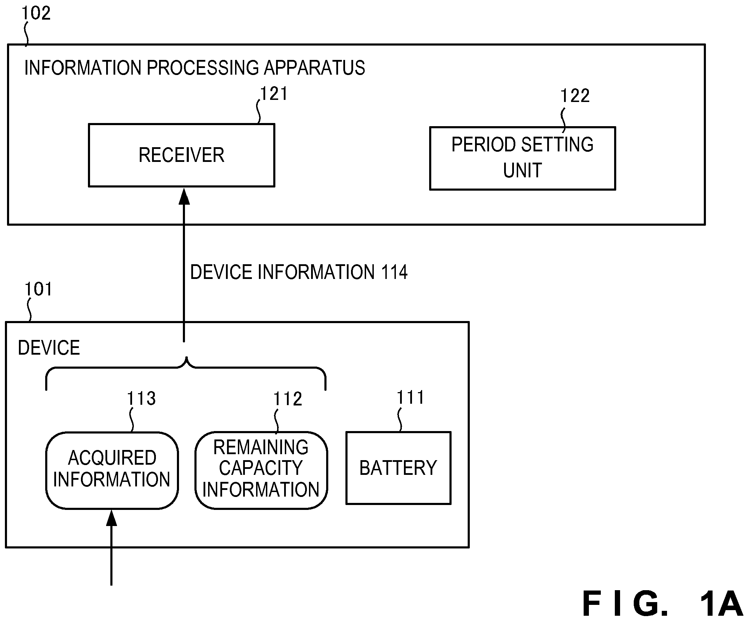

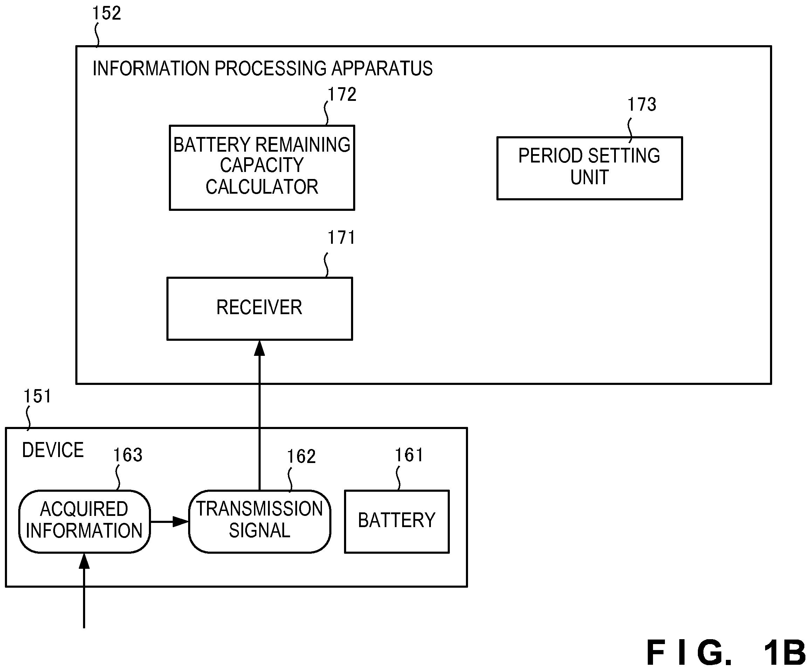

Two kinds of information processing apparatuses according to the first example embodiment of the present invention will be described with reference to Figs. 1A and 1B.

An information processing apparatus 102 shown in Fig. 1A includes a receiver 121 that receives, from a device 101, device information 114 including information 113 acquired by the device 101 and remaining capacity information 112 indicating the remaining capacity of a battery 111 of the device 101. The information processing apparatus 102 includes a period setting unit 122 that sets, if the receiver 121 receives the device information 114, the temporary storage period of the acquired information 113 in a temporary storage unit based on the remaining capacity information 112 included in the device information 114.

On the other hand, a device 151 shown in Fig. 1B converts acquired information 163 acquired by the device 151 into a transmission signal 162, and transmits it. An information processing apparatus 152 includes a receiver 171 that receives the transmission signal 162 from the device 151. The information processing apparatus 152 also includes a battery remaining capacity calculator 172 that calculates, based on the transmission signal 162 received by the receiver 171, the remaining capacity of a battery 161 for driving the device 151. Furthermore, the information processing apparatus 152 includes a period setting unit 173 that sets the temporary storage period of the acquired information 163 in a temporary storage unit based on remaining capacity information indicating the remaining capacity of the battery 161.

The above-described information processing apparatus 102 or 152 can set a value as the temporary storage period when temporarily storing the acquired information received from the device, in consideration of the remaining capacity of the battery of the device. This can prolong the life of the battery of the device, thereby reducing the labor of replacing the battery of the device, as compared with the conventional technique.

### [Second Example Embodiment]

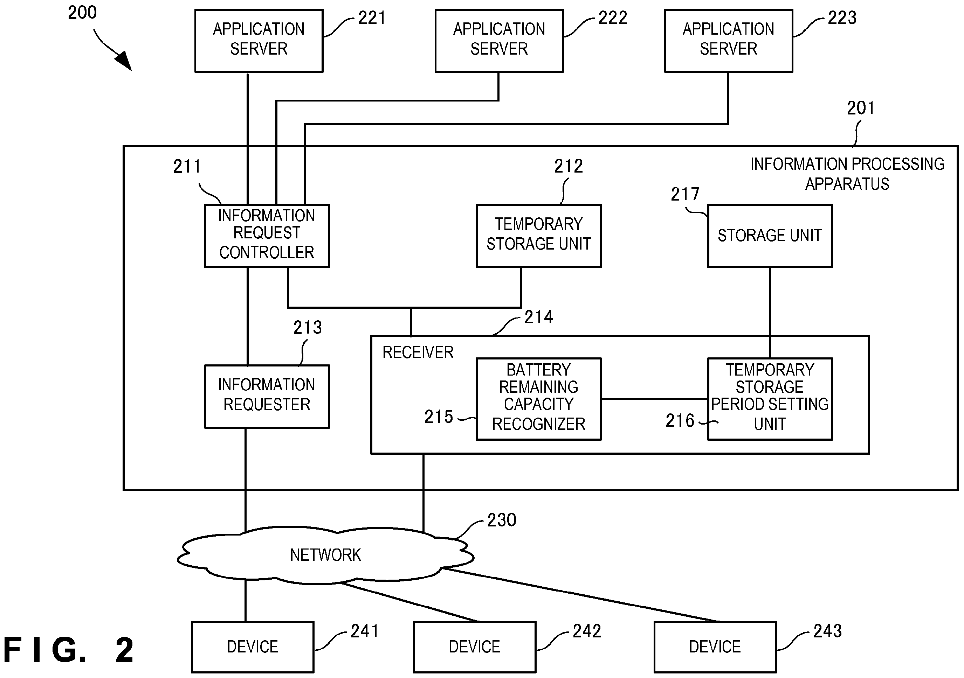

An information processing system according to the second example embodiment of the present invention will be described with reference to Figs. 2 to 10.

### <<Technical Premise>>

On the other hand, a device used in M2M often uses a battery as a power supply, and it is often difficult to replace the battery in terms of the installation location and the structure of the device. In this case, by reducing the power consumption of the device, it is possible to reduce the maintenance cost or prolong the operational period of the device.

In M2M communication, if measurement data is acquired as information from each of various devices, that measures a temperature, humidity, or the like, the information is temporarily stored in a temporary storage device in many cases. This temporary storage device is provided in a gateway apparatus or a common service platform installed between an application server and the device.

In this arrangement, if the application server requests the information acquired by the device, the gateway apparatus or common service platform changes processing in accordance with whether information is temporarily stored in the temporary storage device of itself. That is, if information is temporarily stored in the temporary storage device, the gateway apparatus or common service platform returns the temporarily stored information to the application server without acquiring measurement data from the device. This can reduce the power consumption and communication amount of the device.

In general, a temporary storage period is set for the information temporarily stored in the temporary storage device. If an information acquisition request is received from the application server, the gateway apparatus or common service platform confirms the temporary storage period of the temporarily stored information, and transmits, to the application server, the temporarily stored information during the temporary storage period. If the temporary storage period has elapsed, the gateway apparatus or common service platform acquires information from the device, and updates the information in the temporary storage device while transmitting the acquired information to the application server. The temporary storage period in the temporary storage device has a different optimum value in accordance with the information amount and application characteristic but generally has a fixed value.

As the temporary storage period in the temporary storage device is set shorter, information is more often transmitted from the device to the gateway apparatus or common service platform, thereby shortening the life of the battery of the device, that is, the operational period of the device. On the other hand, if the temporary storage period in the temporary storage device is set too long, data acquired in the past for the length of the temporary storage period at the maximum is returned in response to an information acquisition request from the application server. This may hinder a service operation.

Therefore, the provider or operator of the gateway apparatus and common service platform needs to determine the temporary storage period in the temporary storage device in consideration of the battery capacity and necessary operational period of the device, and an assumed frequency of information acquisition requests. Since, however, the life of the battery is readily influenced by the temperature and other environmental factors, a sign of deterioration such as a voltage drop may be found earlier than the original plan. If the provider of the device is different from the operator of the application server, especially if a plurality of application servers acquire information of one device, it is difficult to estimate in advance the frequency of information acquisition requests sent from the application servers.

### <<Explanation of Second Example Embodiment>>

Fig. 2 is a block diagram for explaining the functional arrangement of the information processing system according to this example embodiment. Referring to Fig. 2, an information processing system 200 includes an information processing apparatus 201, three application servers 221 to 223, a network 230, and three devices 241 to 243.

The information processing apparatus 201 forms a common service platform, and is connected to the application servers 221 to 223 and also connected to the devices 241 to 243 via the network 230.

The information processing apparatus 201 includes an information request controller 211, a temporary storage unit 212, an information requester 213, a receiver 214, a battery remaining capacity recognizer 215, a temporary storage period setting unit 216, and a storage unit 217.

The information request controller 211 includes a network interface or an API (Application Programming Interface) that allows information transmission/reception to/from the application servers 221 to 223. The information request controller 211 is formed by, for example, an electronic circuit incorporated in the information processing apparatus 201 or a program operating on an arithmetic unit. Upon receiving an information acquisition request from each of the application servers 221 to 223, the information request controller 211 refers to the temporary storage unit 212, and returns, if information during a temporary storage period exists in the temporary storage unit 212, the information to each of the application servers 221 to 223. If no information during the temporary storage period exists in the temporary storage unit 212, the information request controller 211 requests the information requester 213 to acquire information requested by each of the application servers 221 to 223. Upon receiving, from the receiver 214, the information requested by each of the application servers 221 to 223, the information request controller 211 transmits the information to each of the application servers 221 to 223.

The temporary storage unit 212 is a storage device capable of storing information acquired from each of the devices 241 to 243 together with information of its temporary storage period. For example, the temporary storage unit 212 is a memory incorporated in the information processing apparatus 201, an HDD (hard Disk Drive), or an SSD (Solid State Drive). Note that information that is obtained by adding, to information (to be referred to as acquired information hereinafter) acquired by each of the devices 241 to 243, information of its temporary storage period and stored in the temporary storage unit 212 will be referred to as temporary storage data hereinafter.

The information requester 213 includes a network interface that allows information transmission/reception to/from the devices 241 to 243, and is formed by, for example, an electronic circuit incorporated in the information processing apparatus 201 or a program operating on the arithmetic unit. The information requester 213 transmits an information acquisition request to each of the devices 241 to 243 in accordance with a command from the information request controller 211.

The receiver 214 includes a network interface that allows information transmission/reception to/from the devices 241 to 243, and is formed by, for example, an electronic circuit incorporated in the information processing apparatus 201 or a program operating on the arithmetic unit. The receiver 214 receives transmission information transmitted by each of the devices 241 to 243. The device information transmitted by each of the devices 241 to 243 includes the information acquired by each of the devices 241 to 243 and battery remaining capacity information. The receiver 214 may receive device information from each of the devices 241 to 243 via a relay apparatus.

The battery remaining capacity recognizer 215 recognizes the battery remaining capacity of each of the devices 241 to 243 based on the battery remaining capacity information included in the information received from each of the devices 241 to 243, and notifies the temporary storage period setting unit 216 of the battery remaining capacity information. The battery remaining capacity indicates the remaining quantity of electricity of the battery. Since, however, it is impossible to directly measure the quantity of electricity, the remaining quantity of electricity is inferred by, for example, checking a voltage. An inference algorithm is different depending on the characteristic of the battery, and is also different for, for example, each lithium battery depending on the maker.

The temporary storage period setting unit 216 sets the temporary storage period of the acquired information based on the battery remaining capacity information received from each of the devices 241 to 243, and information stored in the storage unit 217 and representing the relationship between the battery remaining capacity and the temporary storage period of the acquired information.

The receiver 214 stores the acquired information received from each of the devices 241 to 243 in the temporary storage unit 212 together with the information of the temporary storage period set by the temporary storage period setting unit 216. At the same time, the receiver 214 transfers the acquired information to the information request controller 211.

The storage unit 217 is a storage device capable of storing information representing the relationship between the battery remaining capacity and the temporary storage period of the acquired information, and is, for example, a memory incorporated in the information processing apparatus 201, a hard disk drive, or a solid state drive.

Each of the devices 241 to 243 is, for example, a device such as a temperature and humidity sensor, still camera, video camera, or vibration sensor, and acquires information such as temperature and humidity information, image information, video information, or vibration information, and transmits it as acquired information. Each of the devices 241 to 243 includes a network interface that allows information transmission/reception to/from the information processing apparatus 201.

### <<Explanation of Hardware Arrangement of Information Processing Apparatus>>

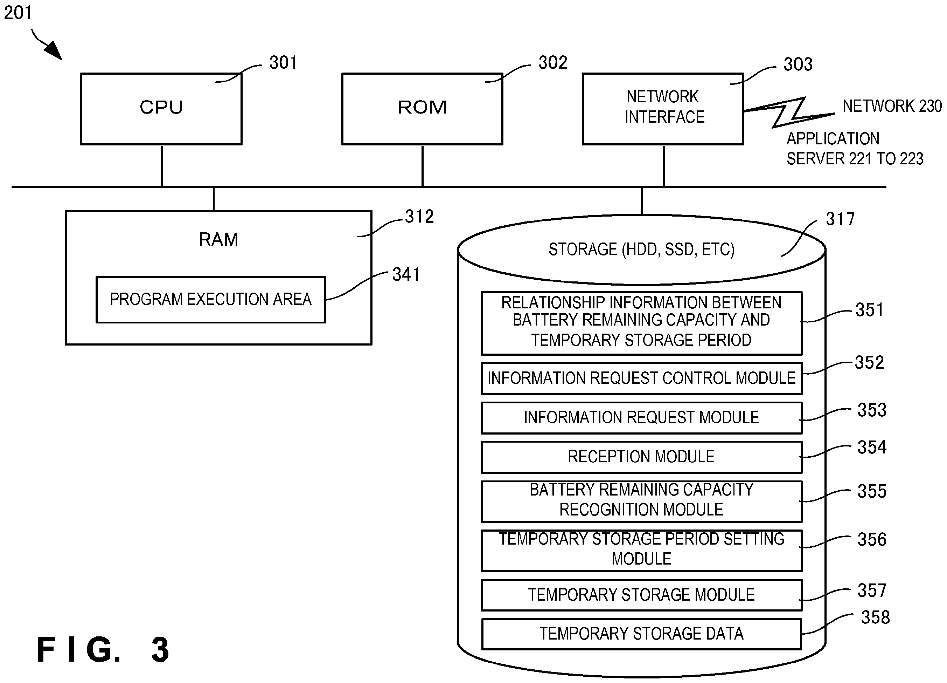

Fig. 3 is a block diagram for explaining the hardware arrangement of the information processing apparatus 201 according to this example embodiment. As shown in Fig. 3, the information processing apparatus 201 includes a CPU (Central Processing Unit) 301, a ROM (Read Only Memory) 302, a network interface 303, a RAM (Random Access Memory) 312, and a storage (for example, an HDD (Hard Disk Drive) or SSD (Solid State Drive)) 317.

The CPU 301 is a central processing unit, and controls the overall information processing apparatus 201 by executing various programs.

The ROM 302 stores various parameters as well as a boot program to be executed first by the CPU 301.

The network interface 303 controls communication with the devices 241 to 243 via the network 230, and communication with the application servers 221 to 223.

The RAM 312 has an information processing program execution area 341.

The storage 317 has relationship information 351 between the battery remaining capacity and the temporary storage period, an information request control module 352, an information request module 353, and a reception module 354. Furthermore, the storage 317 has a battery remaining capacity recognition module 355, a temporary storage period setting module 356, and a temporary storage module 357. The storage 317 temporarily stores, for each of the devices 241 to 243, as temporary storage data 358, information that associates the acquired information received from each of the devices 241 to 243 with the information of its temporary storage period.

The CPU 301 functions as the information request controller 211 by executing the information request control module 352. The CPU 301 functions as the receiver 214 by executing the reception module 354. The CPU 301 functions as the battery remaining capacity recognizer 215 by executing the battery remaining capacity recognition module 355. The CPU 301 functions as the temporary storage period setting unit 216 by executing the temporary storage period setting module 356.

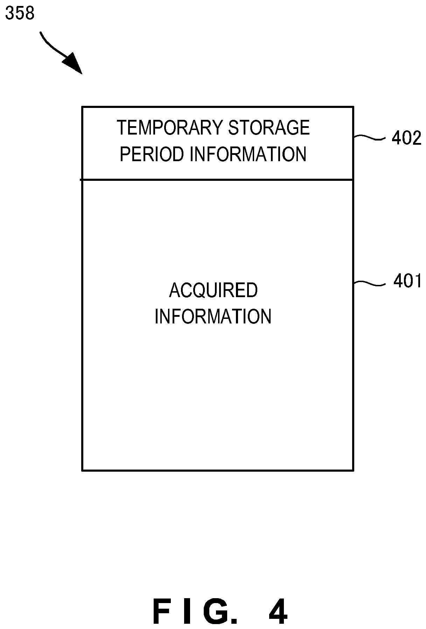

Fig. 4 is a view for explaining contents of the temporary storage data 358. As shown in Fig. 4, the temporary storage data 358 is information that associates acquired information 401 received from each of the devices 241 to 243 with information 402 of its temporary storage period.

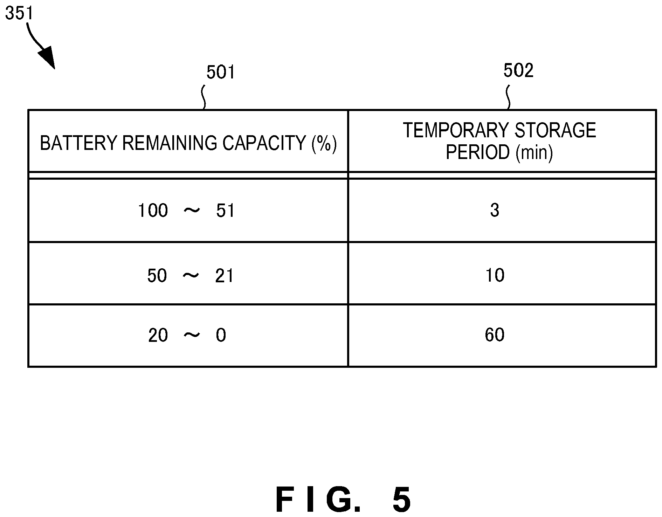

Fig. 5 is a table for explaining the information stored in the storage unit 217 and representing the relationship between the battery remaining capacity and the temporary storage period of the acquired information, that is, the relationship information 351 between the battery remaining capacity and the temporary storage period. As shown in Fig. 5, the relationship information 351 between the battery remaining capacity and the temporary storage period is represented by the table for associating a battery remaining capacity (%) 501 and a temporary storage period (min) 502. In this example embodiment, if the battery remaining capacity 501 falls within a range of 0% (exclusive) to 20% (inclusive), the temporary storage period 502 is set to 60 min. If the battery remaining capacity 501 falls within a range of 20% (exclusive) to 50% (inclusive), the temporary storage period 502 is set to 10 min. If the battery remaining capacity 501 falls within a range of 50% (exclusive) to 100% (inclusive), the temporary storage period 502 is set to 3 min.

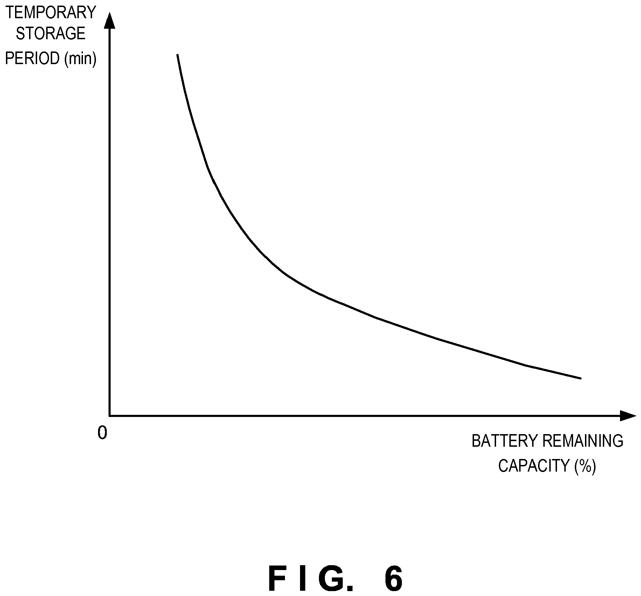

Note that the relationship information 351 between the battery remaining capacity and the temporary storage period need not always be information in a table format, and may be information of continuous correspondence represented by a graph shown in Fig. 6. Furthermore, the battery remaining capacity 501 shown in Fig. 5 is divided into three levels. The present invention, however, is not limited to this. The number of levels may be four or more or two or less, and a threshold can also be arbitrarily determined. The temporary storage period may be obtained by an equation with the battery remaining capacity as a parameter.

### <<Explanation of Functional Arrangement of Device>>

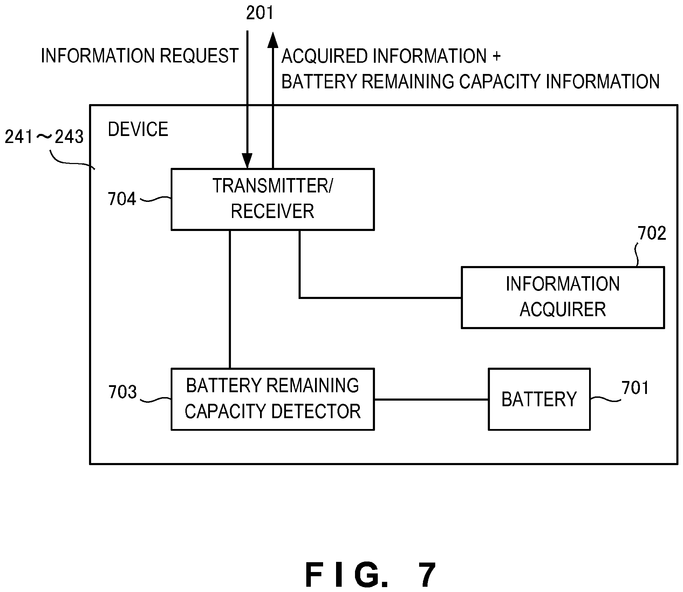

Fig. 7 is a block diagram for explaining the functional arrangement of each of the devices 241 to 243. As shown in Fig. 7, each of the devices 241 to 243 includes a battery 701, an information acquirer 702, a battery remaining capacity detector 703, and a transmitter/receiver 704.

The battery 701 supplies power for driving each of the devices 241 to 243.

Upon receiving an information acquisition instruction from the transmitter/receiver 704, the information acquirer 702 acquires predetermined information and outputs it to the transmitter/receiver 704. For example, the information acquirer 702 is a temperature and humidity sensor, still camera, video camera, vibration sensor, or the like, and acquires information such as temperature and humidity information, image information, video information, or vibration information.

Upon receiving a battery remaining capacity detection instruction from the transmitter/receiver 704, the battery remaining capacity detector 703 detects the remaining capacity of the battery 701, and outputs battery remaining capacity information to the transmitter/receiver 704. In this example embodiment, the battery remaining capacity detector 703 obtains, as the battery remaining capacity information, information representing the percentage of the remaining capacity of the battery to the full charge capacity.

Note that instead of the battery remaining capacity (%), a voltage value, remaining driving time, transmittable count, or remaining discharge capacity (mAh) may be used as the battery remaining capacity information.

Note that if each of the devices 241 to 243 sends, as transmission information, the detected voltage value, remaining driving time, or remaining discharge capacity (mAh) to the information processing apparatus 201, the information processing apparatus 201 holds a table obtained by rewriting the battery remaining capacity (%) of Fig. 5 to the voltage value, remaining driving time, or remaining discharge capacity (mAh). The operation is the same as that when the battery remaining capacity (%) is used.

Furthermore, each of the devices 241 to 243 may calculate a transmittable count within a predetermined time (for example, 3 hours) based on the voltage value, and transmit it to the information processing apparatus 201. The information processing apparatus 201 holds a table obtained by rewriting the battery remaining capacity (%) of Fig. 5 to the transmittable count. The operation is the same as that when the battery remaining capacity (%) is used.

If the transmission information is the voltage value, and there is a device that uses a different kind of battery, the information processing apparatus 201 needs to have a conversion algorithm (of calculating the battery remaining capacity (%) or the like based on the voltage value) in accordance with the characteristic of the battery.

Upon receiving an information acquisition request from the information processing apparatus 201, the transmitter/receiver 704 notifies the information acquirer 702 of an information acquisition instruction while notifying the battery remaining capacity detector 703 of a battery remaining capacity detection instruction. Furthermore, after notifying the information acquirer 702 and the battery remaining capacity detector 703 of the instructions, the transmitter/receiver 704 transmits, to the information processing apparatus 201, the acquired information received from the information acquirer 702 and the battery remaining capacity information received from the battery remaining capacity detector 703.

### <<Explanation of Hardware Arrangement of Device>>

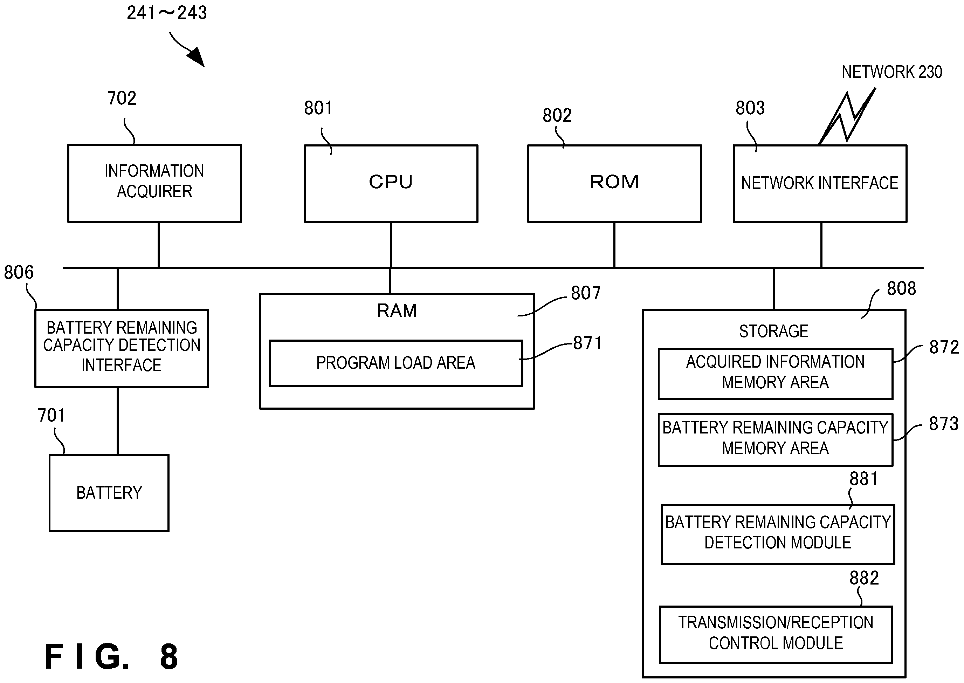

Fig. 8 is a block diagram for explaining the hardware arrangement of each of the devices 241 to 243. As shown in Fig. 8, each of the devices 241 to 243 includes a CPU 801, a ROM 802, a network interface 803, the battery 701, the information acquirer 702, a battery remaining capacity detection interface 806, a RAM 807, and a storage unit 808.

The CPU 801 is a central processing unit, and controls each of the overall devices 241 to 243 by executing a predetermined program. The ROM 802 stores various parameters as well as a boot program to be executed first by the CPU 801. The network interface 803 controls communication with the information processing apparatus 201.

The RAM 807 has a program load area 871, an acquired information memory area 872, and a battery remaining capacity memory area 873.

The storage unit 808 includes a battery remaining capacity detection module 881 and a transmission/reception control module 882. The CPU 801 functions as the battery remaining capacity detector 703 by executing the battery remaining capacity detection module 881, and detects the remaining capacity of the battery 701 via the battery remaining capacity detection interface 806. The CPU 801 functions as the transmitter/receiver 704 together with the network interface 803 by executing the transmission/reception control module 882.

### <<Explanation of Operation>>

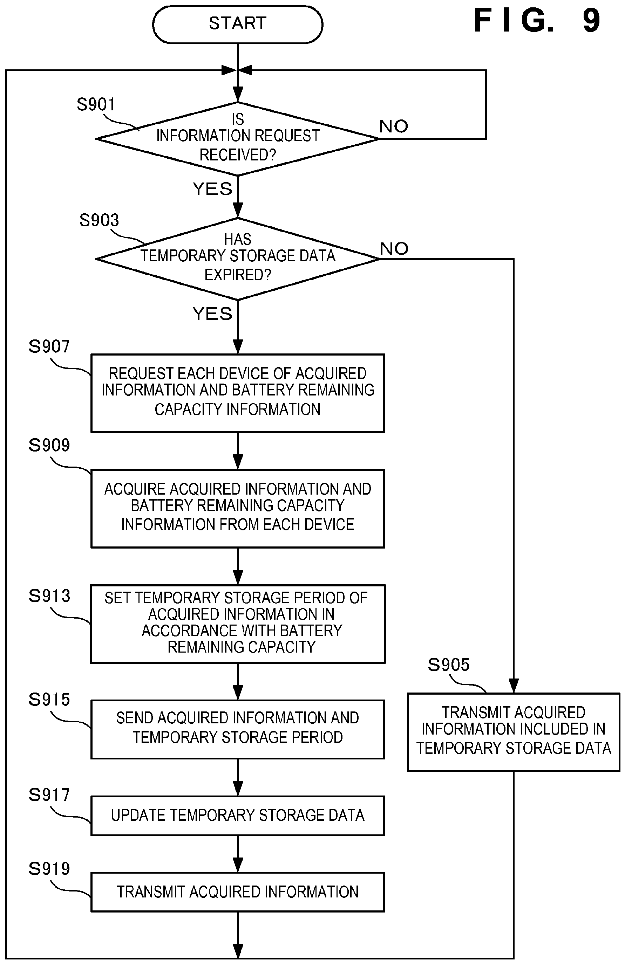

The operation of the information processing apparatus 201 according to this example embodiment will be described next with reference to Fig. 9. Fig. 9 is a flowchart for explaining the processing procedure of the information processing apparatus 201.

If the information processing apparatus 201 receives, in step S901, an information request from each of the application servers 221 to 223, the information request controller 211 confirms, in step S903, the temporary storage data stored in the temporary storage unit 212 and its temporary storage period.

If, as a result of the confirmation in step S903, the temporary storage period has not elapsed, the information request controller 211 transmits, in step S905, the acquired information included in the temporary storage data to each of the application servers 221 to 223, and then shifts to the processing in step S901.

If, as a result of the confirmation in step S903, the temporary storage period has elapsed, the information request controller 211 requests, in step S907, each of the devices 241 to 243 of information via the information requester 213. In step S909, the information requester 213 acquires, from each of the devices 241 to 243, the battery remaining capacity information together with the information requested from the application server.

Upon receiving the information from each of the devices 241 to 243, the receiver 214 causes the battery remaining capacity recognizer 215 to recognize the battery remaining capacity of each of the devices 241 to 243, and notifies the temporary storage period setting unit 216 of it. In step S913, the temporary storage period setting unit 216 sets the temporary storage period of the acquired information in accordance with the battery remaining capacity based on the information stored in advance in the storage unit 217 and representing the relationship between the battery remaining capacity and the temporary storage period of the acquired information.

In step S915, the receiver 214 notifies the information request controller 211 and the temporary storage unit 212 of the acquired information received from each of the devices 241 to 243. At the same time, the receiver 214 notifies the temporary storage unit 212 of the temporary storage period determined by the temporary storage period setting unit 216. Furthermore, in step S917, the temporary storage unit 212 stores, as temporary storage data, the acquired information received from the receiver 214 together with the information of its temporary storage period. In step S919, the information request controller 211 transmits the acquired information received from the receiver 214 to each of the application servers 221 to 223, and then shifts to the processing in step S901.

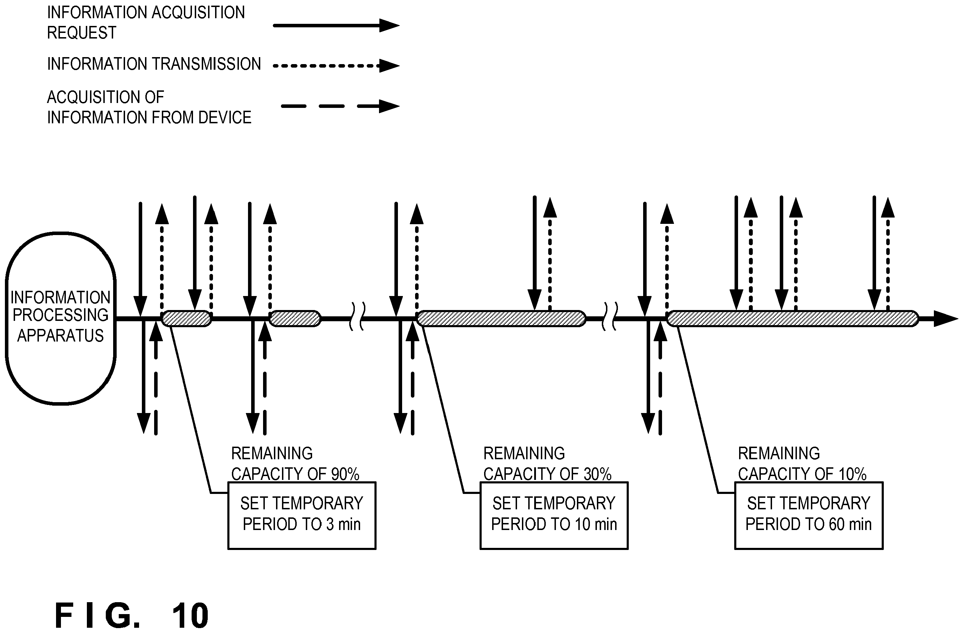

Fig. 10 is a view for explaining the relationship among the information acquisition request by each of the application servers 221 to 223, information acquisition by each of the devices 241 to 243, and the temporary storage period of the acquired information. As shown in Fig. 10, time at which the information processing apparatus 201 acquires information from each of the devices 241 to 243 in response to an information acquisition request from each of the application servers 221 to 223 is time at which the temporary storage period starts. As shown in Fig. 10, the temporary storage period to be set is changed in accordance with the battery remaining capacity. In this example, a case in which control is performed in accordance with the table shown in Fig. 5 is expressed by a timing chart. More specifically, the temporary storage period is set to 3 min at the stage of a battery remaining capacity of 90%. If the battery remaining capacity decreases to 30%, the temporary storage period is set to 10 min. Then, if the battery remaining capacity becomes smaller than 10%, the temporary storage period is set to 60 min.

The information processing apparatus 201 can acquire information about the remaining capacity of the battery 701 of each of the devices 241 to 243, and can preset an optimum value as the temporary storage period when temporarily storing the acquired information received from each of the devices 241 to 243, in consideration of the battery remaining capacity of each of the devices 241 to 243. Therefore, it is possible to reduce the power consumption and communication amount of each of the devices 241 to 243, thereby prolonging the operational period of each of the devices 241 to 243. This can prolong the life of the battery of each of the devices 241 to 243, thereby reducing the labor of replacing the battery of each of the devices 241 to 243, as compared with the conventional technique.

Note that the information processing apparatus 201 is, for example, an M2M platform, and may be an M2M Service Infrastructure defined by oneM2M that standardizes Machine-to-Machine services. The M2M service Infrastructure corresponds to an IN (Infrastructure Node) in an oneM2M architecture. The M2M service Infrastructure includes a CSE (Common Services Entity) that provides CSFs (Common Services Functions) defined by oneM2M. The information processing apparatus 201 may be an apparatus including a plurality of CSEs. Note that the CSE of the IN is also called an IN (infrastructure Node)-CSE.

The network 230 is, for example, a mobile communication network provided by a communication carrier, and may be an Underlying Network defined by oneM2M.

Furthermore, each of the devices 241 to 243 is, for example, a sensor device, and may be an M2M Device defined by oneM2M. The M2M Device corresponds to an ASN (Application Service Node) or ADN (Application Dedicated Node) in the oneM2M architecture, and the ASN includes a CSE. Note that the CSE in the ASN is also called an ASN-CSE.

Each of the application servers 221 to 223 is, for example, a server that processes a specific operation, and may be an M2M Application Infrastructure defined by oneM2M. Each of the application servers 221 to 223 may include an AE (Application Entity) in the oneM2M architecture. Note that an AE existing in an Infrastructure Domain defined by oneM2M and connected to the IN-CSE is also called an IN (Infrastructure Node)-AE.

The information processing apparatus 201 is, for example, a mobile router, and may be an M2M Gateway (gateway apparatus) defined by oneM2M in this case. The M2M Gateway corresponds to an MN (Middle Node) in the oneM2M architecture, and includes a CSE. Note that the CSE in the MN is also called an MN-CSE.

### [Third Example Embodiment]

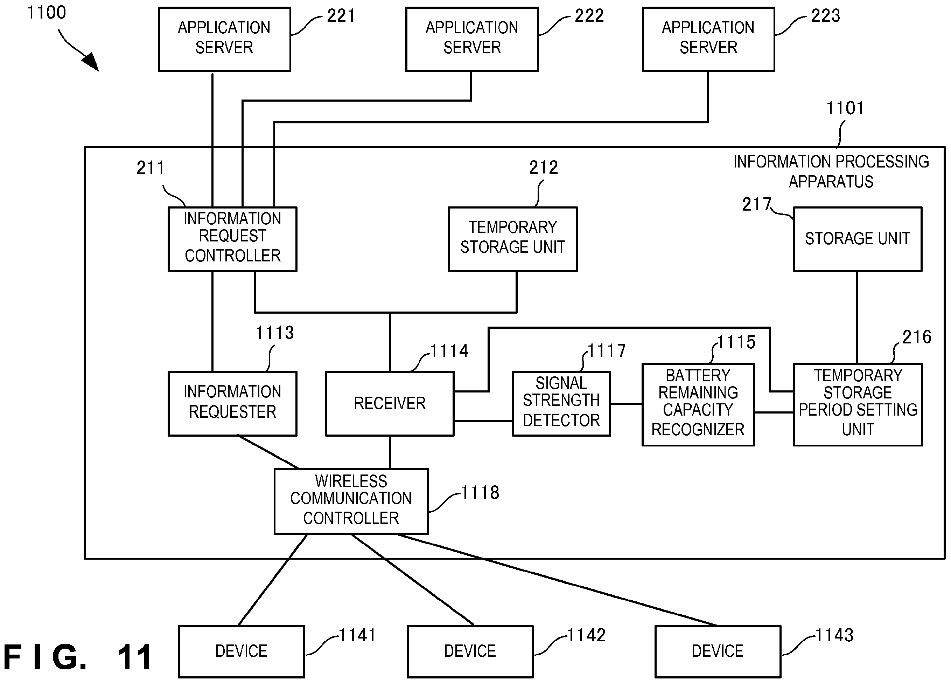

An information processing system according to the third example embodiment of the present invention will be described next with reference to Figs. 11 to 13. Fig. 11 is a block diagram for explaining the functional arrangement of an information processing system 1100 according to this example embodiment. The information processing system according to this example embodiment is different from that according to the second example embodiment in that an information processing apparatus 1101 and devices 1141 to 1143 are directly connected. The information processing system according to this example embodiment is also different from that according to the second example embodiment in that an information requester 1113 and a receiver 1114 that wirelessly communicate with each device via a wireless communication controller 1118 are provided. Furthermore, the information processing system according to this example embodiment includes a battery remaining capacity recognizer 1115 that recognizes a battery remaining capacity based on the detection result of a signal strength detector 1117. The remaining components and operations are the same as those in the second example embodiment. Hence, the same reference numerals denote the same components and operations, and a detailed description thereof will be omitted.

In this example embodiment, the information processing apparatus 1101 and the devices 1141 to 1143 are wirelessly, directly connected via the wireless communication controller 1118, and neither signal relays nor amplifiers are arranged between the information processing apparatus 1101 and the devices 1141 to 1143.

The signal strength detector 1117 detects the strength of a signal received from each of the devices 1141 to 1143 via the wireless communication controller 1118 and the receiver 1114, and notifies the battery remaining capacity recognizer 1115 of it.

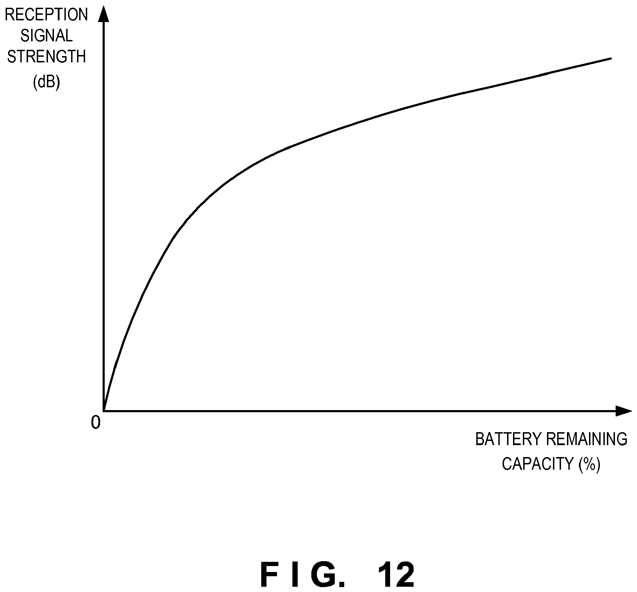

The battery remaining capacity recognizer 1115 stores information representing the correspondence between the strength of the signal received from each of the devices 1141 to 1143 and the battery remaining capacity of each of the devices 1141 to 1143. The battery remaining capacity recognizer 1115 recognizes the battery remaining capacity based on this information and the signal strength sent from the signal strength detector 1117. The information of the correspondence between the strength of the signal received from each of the devices 1141 to 1143 and the battery remaining capacity of each of the devices 1141 to 1143 is represented by a graph shown in Fig. 12.

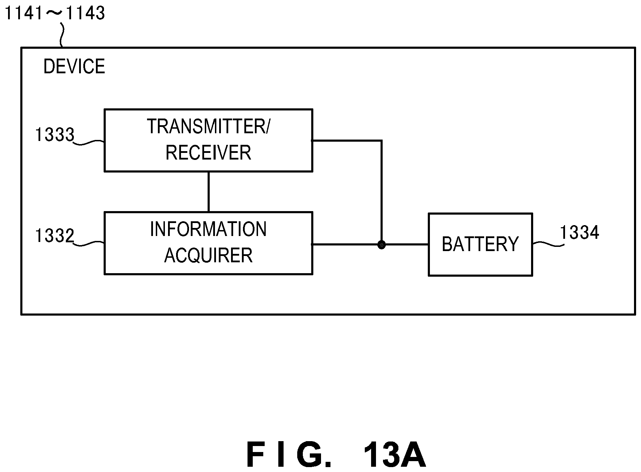

Fig. 13A is a block diagram for explaining the functional arrangement of each of the devices 1141 to 1143 according to this example embodiment. Each of the devices 1141 to 1143 according to this example embodiment includes a battery 1334, an information acquirer 1332, and a transmitter/receiver 1333. The transmitter/receiver 1333 and the information acquirer 1332 are driven by power of the battery 1334. Upon receiving an information request instruction from the information processing apparatus 1101, the transmitter/receiver 1333 transmits information acquired by the information acquirer 1332 to the information processing apparatus 1101.

### <<Explanation of Operation of Information Processing Apparatus>>

In this example embodiment, each of the devices 1141 to 1143 does not transmit its battery remaining capacity to the information processing apparatus 1101. Instead, the battery remaining capacity recognizer 1115 of the information processing apparatus 1101 recognizes the battery remaining capacity of each of the devices 1141 to 1143 based on the signal strength when the acquired information is received from each of the devices 1141 to 1143.

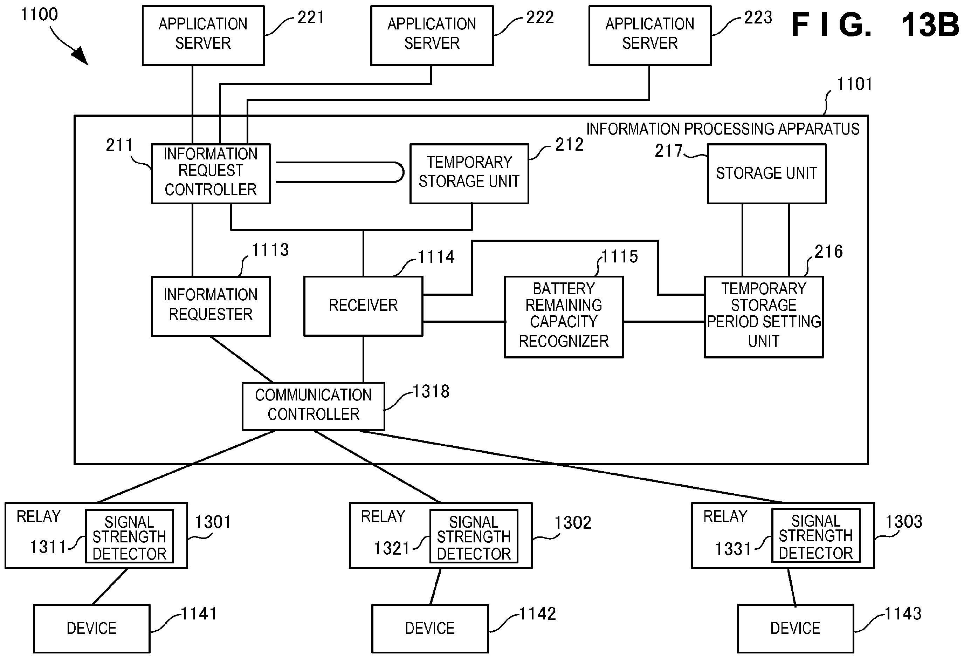

Note that as shown in Fig. 13B, if relays 1301 to 1303 or gateway apparatuses are arranged between the information processing apparatus 1101 and the devices 1141 to 1143, signal strength detectors 1311 to 1331 may be arranged in the relays 1301 to 1303 or gateway apparatuses that are directly connected to the devices 1141 to 1143, respectively. Alternatively, the information processing apparatus 1101 and the devices 1141 to 1143 may be directly connected via a communication controller 1318 using wireless communication or directly connected using wired communication.

According to this example embodiment, it is also possible to obtain the same effect as in the second example embodiment. Note that in this example embodiment, a case in which the signal strength is used has been exemplified. Instead of the signal strength, the transmission rate or the bit error rate of the reception signal may be used. This is because the bit error rate rises along with a decrease in signal strength, and the transmission rate decreases along with a rise in bit error rate.

### [Fourth Example Embodiment]

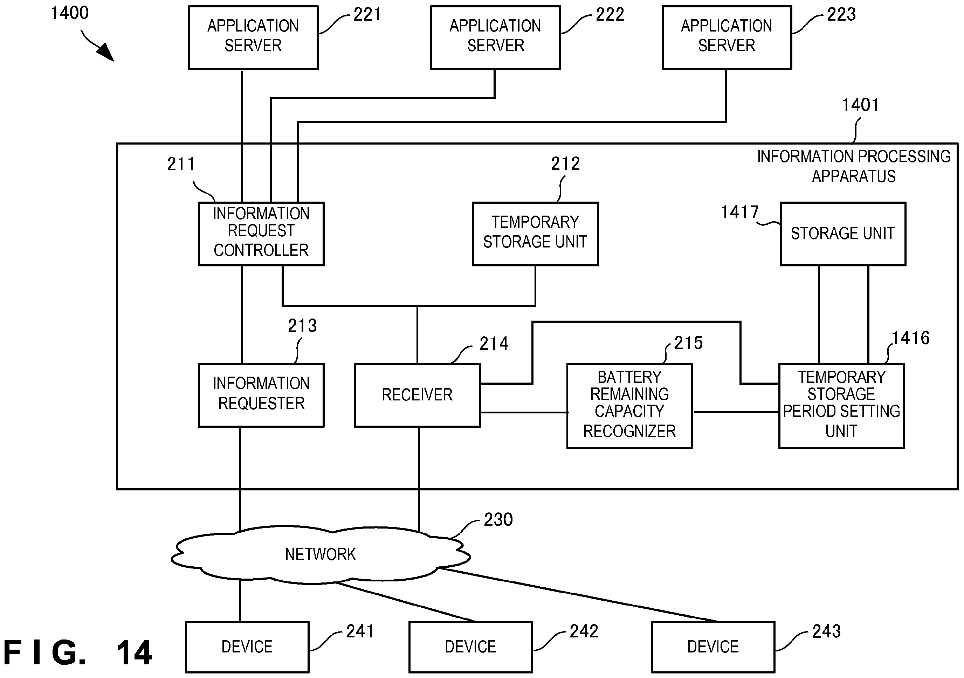

An information processing system according to the fourth example embodiment of the present invention will be described with reference to Fig. 14. Fig. 14 is a block diagram for explaining the functional arrangement of an information processing system 1400 according to this example embodiment. The information processing system 1400 according to this example embodiment is different from that according to the second example embodiment in that a temporary storage period setting unit 1416 that sets a temporary storage period based on information about a device stored in a storage unit 1417 is provided. The remaining components and operations are the same as those in the second example embodiment. Hence, the same reference numerals denote the same components and operations, and a detailed description thereof will be omitted.

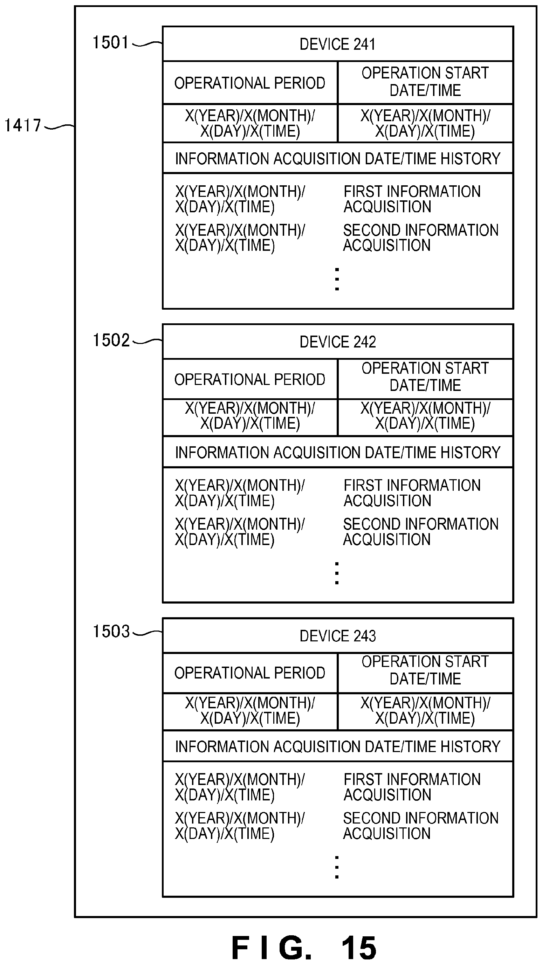

In this example embodiment, the storage unit 1417 stores pieces 1501 to 1503 of preset information about operational periods, operation start dates/times, and information acquisition date/time histories associated with devices 241 to 243, as shown in Fig. 15.

The temporary storage period setting unit 1416 acquires pieces of information about the operational periods, operation start dates/times, and information acquisition date/time histories associated with the devices 241 to 243 with reference to the pieces 1501 to 1503 of information stored in the storage unit 1417. Furthermore, the temporary storage period setting unit 1416 calculates allowable information acquisition counts by checking the numbers of days elapsed since the start of the operation, information acquisition date/time histories, and the battery remaining capacities of the devices 241 to 243. The temporary storage period setting unit 1416 calculates the temporary storage period of temporary storage data based on each of the calculated information acquisition counts, and sets it.

That is, the temporary storage period setting unit 1416 recognizes the percentage (r) of the remaining capacity of a battery 701 with respect to the minimum battery remaining capacity capable of transmitting information, and sets it as a usable battery remaining capacity. Furthermore, the temporary storage period setting unit 1416 recognizes, based on the information acquisition date/time history, the number (t) of times information has been acquired since the start of the operation, and calculates, based on the number (t) of times and the current battery remaining capacity, the percentage (u) of a battery remaining capacity to the full charge capacity, that is required for one information acquisition operation. Then, the temporary storage period setting unit 1416 calculates the number (v) of remaining days until the end of the operational period, calculates a value of r/u as the number of times information can be acquired before the end of the operational period, and sets a value of v/(u/r) as the temporary storage period of temporary storage data.

According to this example embodiment, an information processing apparatus 1401 can preset an optimum value as the temporary storage period when temporarily storing the acquired information received from each of the devices 241 to 243, in consideration of the battery remaining capacity of each of the devices 241 to 243. Therefore, it is possible to reduce the power consumption and communication amount of each of the devices 241 to 243. This can prolong the life of the battery of each of the devices 241 to 243, thereby reducing the labor of replacing the battery of each of the devices 241 to 243, as compared with the conventional technique.

### [Fifth Example Embodiment]

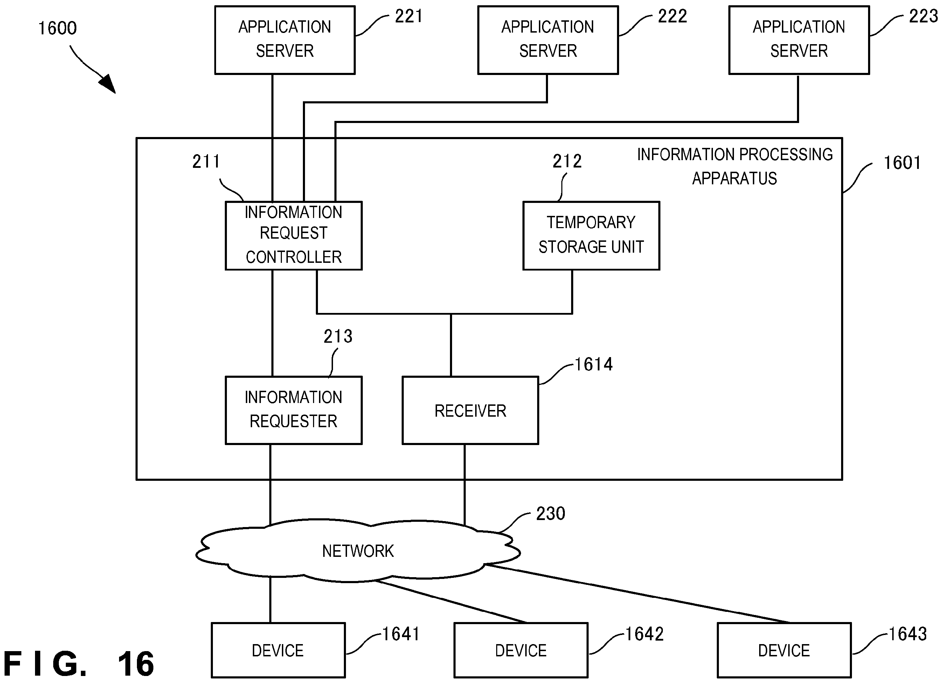

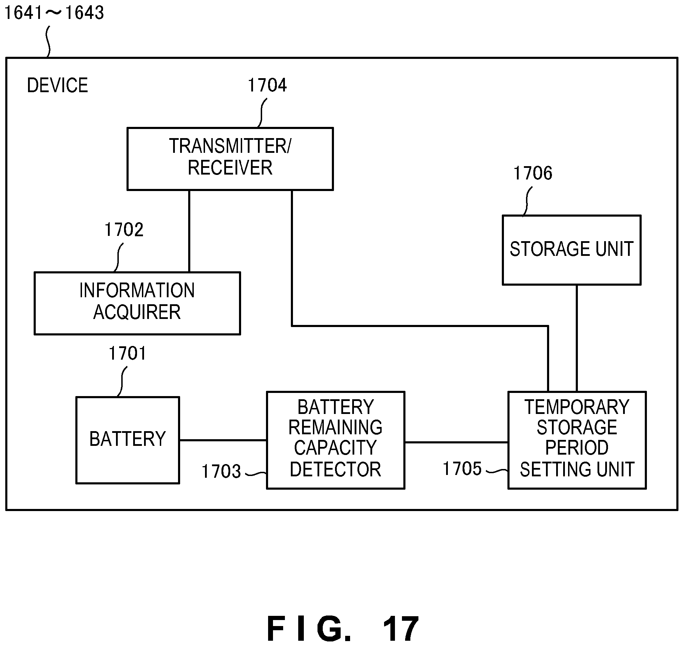

An information processing system according to the fifth example embodiment of the present invention will be described with reference to Figs. 16 and 17. Fig. 16 is a block diagram for explaining the functional arrangement of an information processing system 1600 according to this example embodiment. The information processing system 1600 according to this example embodiment is different from that according to the second example embodiment in that an information processing apparatus 1601 for acquiring information during a temporary storage period from each of devices 1641 to 1643 is provided. The remaining components and operations are the same as those in the second example embodiment. Hence, the same reference numerals denote the same components and operations, and a detailed description thereof will be omitted.

The information processing apparatus 1601 includes an information request controller 211, a temporary storage unit 212, an information requester 213, and a receiver 1614.

The receiver 1614 receives acquired information added with information of a temporary storage period from each of the devices 1641 to 1643, and stores it in the temporary storage unit 212.

Fig. 17 is a block diagram for explaining the functional arrangement of each of the devices 1641 to 1643 according to this example embodiment. Each of the devices 1641 to 1643 includes a battery 1701, an information acquirer 1702, a battery remaining capacity detector 1703, a transmitter/receiver 1704, a temporary storage period setting unit 1705, and a storage unit 1706.

Upon receiving a battery remaining capacity detection instruction from the transmitter/receiver 1704, the battery remaining capacity detector 1703 detects the remaining capacity of the battery 1701, and outputs information of the battery remaining capacity to the temporary storage period setting unit 1705.

Based on the information of the battery remaining capacity received from the battery remaining capacity detector 1703, and information stored in the storage unit 1706 and representing the relationship between the battery remaining capacity and the temporary storage period of the acquired information, the temporary storage period setting unit 1705 sets the temporary storage period of the information acquired by the information acquirer 1702.

The storage unit 1706 is a storage that stores the information representing the relationship between the battery remaining capacity and the temporary storage period of the acquired information.

According to this example embodiment, each of the devices 1641 to 1643 can preset an optimum value as a temporary storage period when temporarily storing the acquired information, in consideration of the battery remaining capacity of each of the devices 1641 to 1643.
Therefore, it is possible to reduce the power consumption and communication amount of each of the devices 1641 to 1643. This can prolong the life of the battery of each of the devices 1641 to 1643, thereby reducing the labor of replacing the battery of each of the devices 1641 to 1643, as compared with the conventional technique.

### [Sixth Example Embodiment]

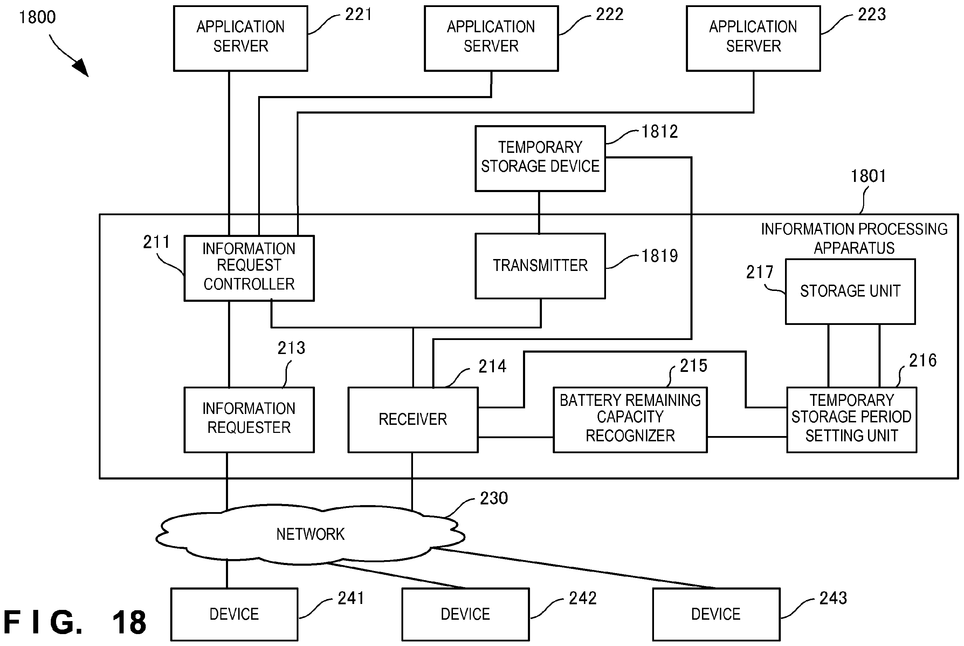

An information processing system according to the sixth example embodiment of the present invention will be described with reference to Fig. 18. Fig. 18 is a block diagram for explaining the functional arrangement of an information processing system 1800 according to this example embodiment. The information processing system 1800 according to this example embodiment is different from that according to the second example embodiment in that a temporary storage device 1812 is provided outside an information processing apparatus 1801, and the information processing apparatus 1801 sends, to the temporary storage device 1812, acquired data for which a temporary storage period has been designated. The remaining components and operations are the same as those in the second example embodiment. Hence, the same reference numerals denote the same components and operations, and a detailed description thereof will be omitted.

Similarly to the above-described example embodiments, acquired information added with a temporary storage period set by a temporary storage period setting unit 216 is sent to the temporary storage device 1812 via a transmitter 1819. The temporary storage device 1812 holds the received acquired information for the temporary storage period added to the acquired information.

As described above, if the information acquired from the device is stored in the external temporary storage device 1812, it is also possible to prolong the life of the battery of the device by controlling the temporary storage period as in the above-described first to fifth example embodiments, thereby reducing the labor of replacing the battery of the device.

### [Seventh Example Embodiment]

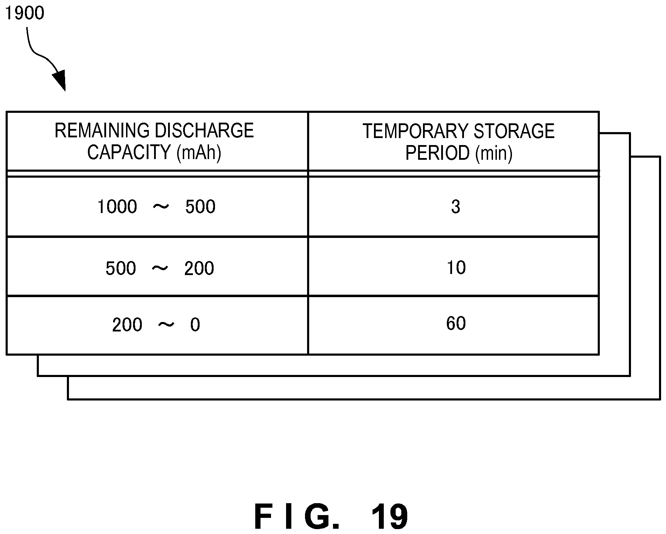

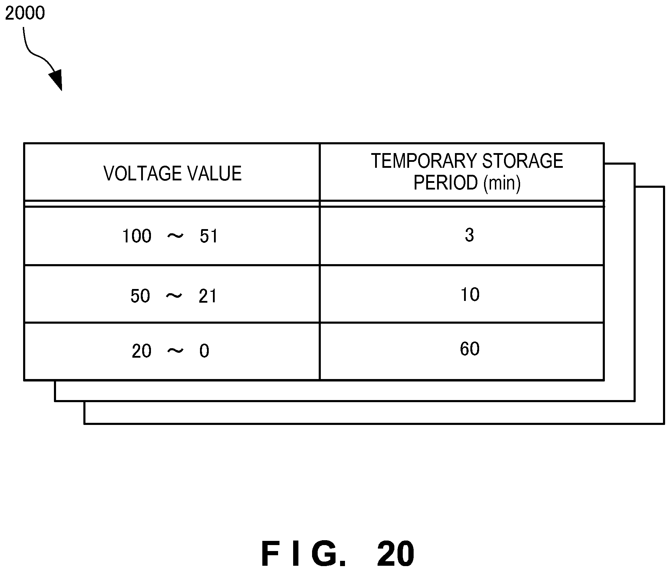

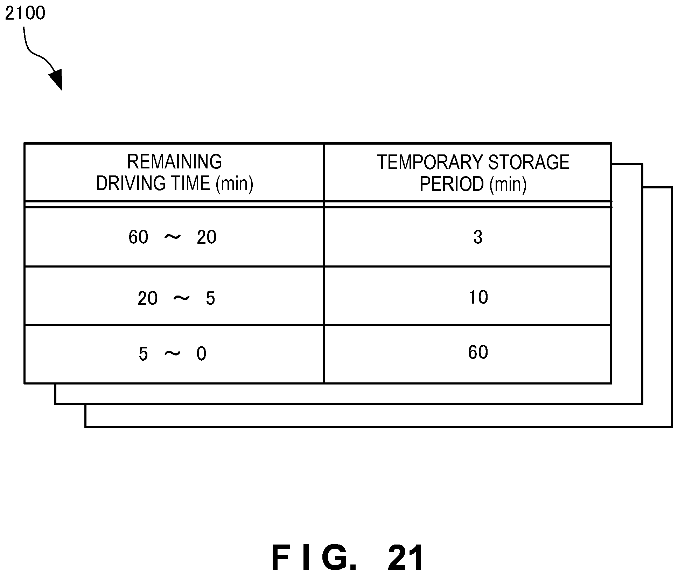

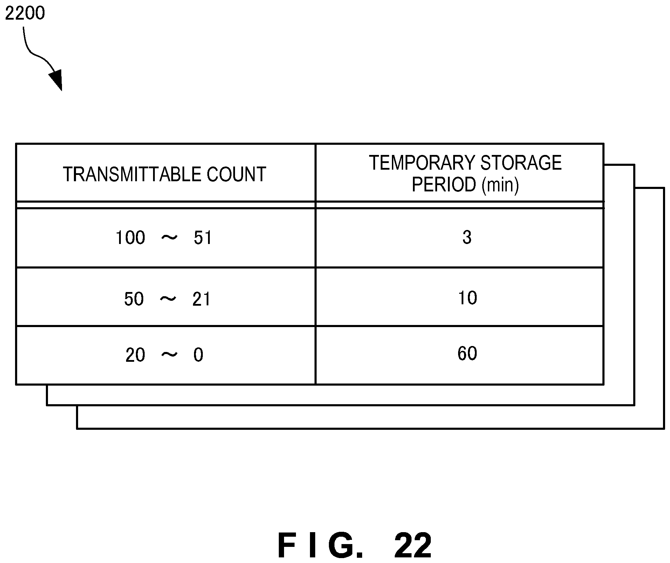

An information processing system according to the seventh example embodiment of the present invention will be described next with reference to Figs. 19 to 22. Fig. 19 is a view showing tables used in the information processing system according to this example embodiment, and shows the relationship between battery remaining capacity information and a temporary storage period.

The information processing system according to this example embodiment is different from that according to the second example embodiment in that a plurality of kinds of transmission information (a voltage value, remaining deriving time, transmittable count, remaining discharge capacity (mAh), and the like in addition to a battery remaining capacity (%)) are received from devices. For example, assume that the following devices are mixed.
(1) A device that can transmit only a voltage value
(2) A device that can convert a value into a battery remaining capacity (%) and transmit it
(3) A device that can transmit only a remaining discharge capacity (mAh)
(4) A device that can transmit only a remaining driving time
(5) A device that can transmit only a transmittable count

In this case, the various tables shown in Figs. 19 to 22 are used in addition to the table shown in Fig. 5 to convert each of pieces of transmission information into a temporary storage period.

Since each battery has a different characteristic, if there are devices that use different batteries, tables for the respective batteries are held.

The remaining components and operations are the same as those in the second example embodiment. Hence, the same reference numerals denote the same components and operations, and a detailed description thereof will be omitted.

According to this example embodiment, even if various kinds of devices are mixed, it is possible to prolong the life of the battery of each device by appropriately controlling the temporary storage period of information acquired from each device, thereby reducing the labor of replacing the battery of the device.

### [Other Example Embodiments]

While the invention has been particularly shown and described with reference to example embodiments thereof, the invention is not limited to these example embodiments. It will be understood by those of ordinary skill in the art that various changes in form and details may be made therein without departing from the spirit and scope of the present invention as defined by the claims.

Furthermore, the storage unit 1706 according to the fifth example embodiment may hold, as information, the operational period, operation start date, and information acquisition date/time history of the device, and the temporary storage period setting unit 1705 may calculate and set a temporary storage period, similarly to the fourth example embodiment.

The present invention is applicable to a system including a plurality of devices or a single apparatus. The present invention is also applicable even when an information processing program for implementing the functions of example embodiments is supplied to the system or apparatus directly or from a remote site. Hence, the present invention also incorporates the program installed in a computer to implement the functions of the present invention by the computer, a medium storing the program, and a WWW (World Wide Web) server that causes a user to download the program. Especially, the present invention incorporates at least a non-transitory computer readable medium storing a program that causes a computer to execute processing steps included in the above-described example embodiments.

### [Other Expressions of Example Embodiments]

Some or all of the above-described example embodiments can also be described as in the following supplementary notes but are not limited to the followings.

### (Supplementary Note 1)

There is provided an information processing apparatus comprising:
a receiver that receives, from a device, device information including information acquired by the device and remaining capacity information indicating a battery remaining capacity of the device; and
a period setting unit that sets, if the receiver receives the device information, a temporary storage period of the acquired information in a temporary storage unit based on the remaining capacity information included in the device information.

### (Supplementary Note 2)

There is provided an information processing apparatus comprising:
a receiver that receives, from a device for converting acquired information into a transmission signal and transmitting the transmission signal, the transmission signal;
a battery remaining capacity calculator that calculates, based on the transmission signal received by the receiver, a remaining capacity of a battery for driving the device; and
a period setting unit that sets a temporary storage period of the acquired information in a temporary storage unit based on remaining capacity information indicating the remaining capacity of the battery.

### (Supplementary Note 3)

There is provided the information processing apparatus according to supplementary note 1 or 2, wherein the period setting unit holds information representing a relationship between the remaining capacity information and the temporary storage period, and sets the temporary storage period based on the information.

### (Supplementary Note 4)

There is provided the information processing apparatus according to supplementary note 2, wherein
the device is directly connected to the information processing apparatus, and
a battery remaining capacity recognizer of the information processing apparatus recognizes the remaining capacity of the battery based on a strength of the transmission signal received by the receiver.

### (Supplementary Note 5)

There is provided the information processing apparatus according to any one of supplementary notes 1 to 4, wherein the period setting unit holds, as device information, an operational period, an operation start date, and an information acquisition date/time history of the device, calculates the number of remaining days until an end of the operational period while calculating an allowable information acquisition count based on the number of days elapsed since the operation start date and the remaining capacity of the battery, and calculates and sets the temporary storage period using the information acquisition count and the number of remaining days.

### (Supplementary Note 6)

There is provided the information processing apparatus according to any one of supplementary notes 1 to 5, wherein the temporary storage unit stores information of the temporary storage period of the acquired information together with the acquired information.

### (Supplementary Note 7)

There is provided the information processing apparatus according to any one of supplementary notes 1 to 6, wherein the temporary storage unit deletes the acquired information for which the temporary storage period has elapsed.

### (Supplementary Note 8)

There is provided a device for transmitting a transmission signal to an information processing apparatus, comprising:
an information acquirer that acquires predetermined information as acquired information;
a transmitter that converts transmission information including the acquired information into a transmission signal and transmits the transmission signal; and
a detector that detects a remaining capacity of a battery for driving the information acquirer and the transmitter,
the transmitter including
a receiver that receives, as the transmission signal, the transmission information including the acquired information from the device,
a temporary storage unit that temporarily stores the acquired information,
a battery remaining capacity recognizer that recognizes the remaining capacity of the battery based on at least one of the transmission signal and the transmission information received by the receiver, and
a period setting unit that sets a temporary storage period of the acquired information in the temporary storage unit based on the remaining capacity of the battery.

### (Supplementary Note 9)

There is provided an information processing method comprising:
receiving, from a device, device information including information acquired by the device and remaining capacity information indicating a battery remaining capacity of the device; and
setting, if the device information is received, a temporary storage period of the acquired information in a temporary storage unit based on the remaining capacity information included in the device information.

### (Supplementary Note 10)

There is provided an information processing method comprising:
receiving, from a device for converting acquired information into a transmission signal and transmitting the transmission signal, the transmission signal;
calculating, based on the transmission signal, a remaining capacity of a battery for driving the device; and
setting a temporary storage period of the acquired information in a temporary storage unit based on remaining capacity information indicating the remaining capacity of the battery.

### (Supplementary Note 11)

There is provided an information processing program for causing a computer to execute a method, comprising:
receiving, from a device, device information including information acquired by the device and remaining capacity information indicating a battery remaining capacity of the device; and
setting, if the device information is received, a temporary storage period of the acquired information in a temporary storage unit based on the remaining capacity information included in the device information.

### (Supplementary Note 12)

There is provided an information processing program for causing a computer to execute a method, comprising:
receiving, from a device for converting acquired information into a transmission signal and transmitting the transmission signal, the transmission signal;
calculating, based on the transmission signal, a remaining capacity of a battery for driving the device; and
setting a temporary storage period of the acquired information in a temporary storage unit based on remaining capacity information indicating the remaining capacity of the battery.

### (Supplementary Note 13)

There is provided an information processing system comprising a device driven by a battery and an information processing apparatus,
the device including
an information acquirer that acquires predetermined information as acquired information; and
a transmitter that converts transmission information including the acquired information into a transmission signal and transmits the transmission signal to the information processing apparatus, and
the information processing apparatus including
a receiver that receives, as the transmission signal, the transmission information including the acquired information from the device,
a temporary storage unit that temporarily stores the acquired information,
a battery remaining capacity recognizer that recognizes the remaining capacity of the battery based on at least one of the transmission signal and the transmission information received by the receiver, and
a period setting unit that sets a temporary storage period of the acquired information in the temporary storage unit based on the remaining capacity of the battery.

## Claims

1. An information processing apparatus comprising:
a receiver that receives, from a device, device information including information acquired by the device and remaining capacity information indicating a battery remaining capacity of the device; and
a period setting unit that sets, if said receiver receives the device information, a temporary storage period of the acquired information in a temporary storage unit based on the remaining capacity information included in the device information.

2. An information processing apparatus comprising:
a receiver that receives, from a device for converting acquired information into a transmission signal and transmitting the transmission signal, the transmission signal;
a battery remaining capacity calculator that calculates, based on the transmission signal received by said receiver, a remaining capacity of a battery for driving the device; and
a period setting unit that sets a temporary storage period of the acquired information in a temporary storage unit based on remaining capacity information indicating the remaining capacity of the battery.

3. The information processing apparatus according to claim 1 or 2, wherein said period setting unit holds information representing a relationship between the remaining capacity information and the temporary storage period, and sets the temporary storage period based on the information.

4. The information processing apparatus according to claim 2, wherein
the device is directly connected to the information processing apparatus, and
a battery remaining capacity recognizer of the information processing apparatus recognizes the remaining capacity of the battery based on a strength of the transmission signal received by said receiver.

5. The information processing apparatus according to any one of claims 1 to 4, wherein said period setting unit holds, as device information, an operational period, an operation start date, and an information acquisition date/time history of the device, calculates the number of remaining days until an end of the operational period while calculating an allowable information acquisition count based on the number of days elapsed since the operation start date and the remaining capacity of the battery, and calculates and sets the temporary storage period using the information acquisition count and the number of remaining days.

6. A device for transmitting a transmission signal to an information processing apparatus, comprising:
an information acquirer that acquires predetermined information as acquired information;
a transmitter that converts transmission information including the acquired information into a transmission signal and transmits the transmission signal; and
a detector that detects a remaining capacity of a battery for driving said information acquirer and said transmitter,
said transmitter including
a receiver that receives, as the transmission signal, the transmission information including the acquired information from the device,
a temporary storage unit that temporarily stores the acquired information,
a battery remaining capacity recognizer that recognizes the remaining capacity of the battery based on at least one of the transmission signal and the transmission information received by said receiver, and
a period setting unit that sets a temporary storage period of the acquired information in said temporary storage unit based on the remaining capacity of the battery.

7. An information processing method comprising:
receiving, from a device, device information including information acquired by the device and remaining capacity information indicating a battery remaining capacity of the device; and
setting, if the device information is received, a temporary storage period of the acquired information in a temporary storage unit based on the remaining capacity information included in the device information.

8. An information processing method comprising:
receiving, from a device for converting acquired information into a transmission signal and transmitting the transmission signal, the transmission signal;
calculating, based on the transmission signal, a remaining capacity of a battery for driving the device; and
setting a temporary storage period of the acquired information in a temporary storage unit based on remaining capacity information indicating the remaining capacity of the battery.

9. An information processing program for causing a computer to execute a method, comprising:
receiving, from a device, device information including information acquired by the device and remaining capacity information indicating a battery remaining capacity of the device; and
setting, if the device information is received, a temporary storage period of the acquired information in a temporary storage unit based on the remaining capacity information included in the device information.

10. An information processing program for causing a computer to execute a method, comprising:
receiving, from a device for converting acquired information into a transmission signal and transmitting the transmission signal, the transmission signal;
calculating, based on the transmission signal, a remaining capacity of a battery for driving the device; and
setting a temporary storage period of the acquired information in a temporary storage unit based on remaining capacity information indicating
the remaining capacity of the battery.
